# EUROPEAN PATENT APPLICATION

(11) **EP 4 228 217 A1**
(43) Date of publication of application: **16.08.2023**
(21) Application number: 21877013.9
(22) Date of filing: 09.10.2021
(51) Int. Cl.: H04L 41/00

(54) **NEURAL NETWORK INFORMATION TRANSMISSION METHOD AND APPARATUS, COMMUNICATION DEVICE, AND STORAGE MEDIUM**

(30) Priority: 09.10.2020 CN 202011074715
(71) Applicant: Vivo Mobile Communication Co., Ltd., Dongguan, Guangdong 523863 (CN)
(72) Inventor: YANG, Ang, Dongguan, Guangdong 523863 (CN)
(74) Representative: Lavoix
(86) International application number: PCT/CN2021/122765
(87) International publication number: WO 2022/073496

(57) **Abstract**

This application provides a neural network information transmission method and apparatus, a communication device, and a storage medium. The method includes: receiving first information sent by a first communication device, where the first information is output information of a first neural network of the first communication device; and sending second information to the first communication device, where the second information is information obtained by training the first information or third information as an input of a second neural network of a second communication device, and the third information is information obtained based on the first information.

## Description

### CROSS-REFERENCE TO RELATED APPLICATIONS

This application claims priority to Chinese Patent Application No. 202011074715.3 filed in China on October 9, 2020, which is incorporated herein by reference in its entirety.

### TECHNICAL FIELD

This application relates to the field of communication technologies, and specifically relates to a neural network information transmission method and apparatus, a communication device, and a storage medium.

### BACKGROUND

In a communication system, a large amount of information needs to be transmitted between communication devices, for example, information is transmitted between a terminal and a network device, information is transmitted between terminals, and information is transmitted between network devices. Although a neural network is introduced into communication devices in some communication systems, these neural networks are trained in a terminal development phase, and are trained by using experimental data. Therefore, communication performance of the terminal is relatively low.

### SUMMARY

Embodiments of this application provide a neural network information transmission method and apparatus, a communication device, and a storage medium, so that a problem that communication performance of the communication device is relatively low can be resolved.

According to a first aspect, an embodiment of this application provides a neural network information transmission method, applied to a second communication device, and including:
receiving first information sent by a first communication device, where the first information is output information of a first neural network of the first communication device; and
sending second information to the first communication device, where the second information is information obtained by training the first information or third information as an input of a second neural network of the second communication device, and the third information is information obtained based on the first information.

According to a second aspect, an embodiment of this application provides a neural network information transmission method, applied to a first communication device, and including:
sending first information to a second communication device, where the first information is output information of a first neural network of the first communication device; and
receiving second information sent by the second communication device, where the second information is information obtained by training the first information or third information as an input of a second neural network of the second communication device, and the third information is information obtained based on the first information.

According to a third aspect, an embodiment of this application provides a neural network information transmission apparatus, applied to a second communication device, and including:
a receiving module, configured to receive first information sent by a first communication device, where the first information is output information of a first neural network of the first communication device; and
a sending module, configured to send second information to the first communication device, where the second information is information obtained by training the first information or third information as an input of a second neural network of the second communication device, and the third information is information obtained based on the first information.

According to a fourth aspect, an embodiment of this application provides a neural network information transmission apparatus, applied to a first communication device, and including:
a sending module, configured to send first information to a second communication device, where the first information is output information of a first neural network of the first communication device; and
a receiving module, configured to receive second information sent by the second communication device, where the second information is information obtained by training the first information or third information as an input of a second neural network of the second communication device, and the third information is information obtained based on the first information.

According to a fifth aspect, an embodiment of this application provides a communication device. The communication device is a second communication device, and includes a memory, a processor, and a program or and instruction that is stored in the memory and that may run on the processor. When the program or the instruction is executed by the processor, steps in the neural network information transmission method on a side of the second communication device provided in embodiments of this application are implemented.

According to a sixth aspect, an embodiment of this application provides a communication device. The communication device is a first communication device, and includes a memory, a processor, and a program or and instruction that is stored in the memory and that may run on the processor. When the program or the instruction is executed by the processor, steps in the neural network information transmission method on a side of the first communication device provided in embodiments of this application are implemented.

According to a seventh aspect, an embodiment of this application provides a readable storage medium. A program or an instruction is stored in the readable storage medium, and when the program or the instruction is executed by a processor, steps in the neural network information transmission method on a side of the second communication device provided in embodiments of this application are implemented, or when the program or the instruction is executed by a processor, steps in the neural network information transmission method on a side of the first communication device provided in embodiments of this application are implemented.

According to an eighth aspect, a chip is provided. The chip includes a processor and a communication interface, the communication interface is coupled to the processor, and the processor is configured to run a program or an instruction of a network side device, to implement the method described in the first aspect or the method described in the second aspect.

According to a ninth aspect, a computer program product is provided. The computer program product is stored in a non-volatile storage medium, and the computer program product is executed by at least one processor to implement the method described in the first aspect or to implement the method described in the second aspect.

In this embodiment of this application, first information sent by a first communication device is received, where the first information is output information of a first neural network of the first communication device; and second information is sent to the first communication device, where the second information is information obtained by training the first information or third information as an input of a second neural network of a second communication device, and the third information is information obtained based on the first information. In this way, because the first information or the third information may be trained as the input of the second neural network, and the second information obtained through training is sent to the first communication device, the second neural network can be trained in real time, to improve communication performance of the communication device.

### BRIEF DESCRIPTION OF DRAWINGS

FIG 1 is a block diagram of a wireless communication system to which an embodiment of this application is applicable;
FIG 2 is a flowchart of a neural network information transmission method according to an embodiment of this application;
FIG 3 is a flowchart of another neural network information transmission method according to an embodiment of this application;
FIG 4 is a structural diagram of a neural network information transmission apparatus according to an embodiment of this application;
FIG 5 is a structural diagram of another neural network information transmission apparatus according to an embodiment of this application;
FIG 6 is a structural diagram of a communication device according to an embodiment of this application; and
FIG 7 is a structural diagram of another communication device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art fall within the protection scope of this application.

Terms "first" and "second" in the specification and claims of this application are used to distinguish between similar objects, and do not need to be used to describe a specific order or sequence. It should be understood that terms used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and the character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably. The described technology may be used in the foregoing system and radio technology, and may also be used in another system and radio technology. However, a New Radio (New Radio, NR) system is described below as an example, and the term NR is used in most of the descriptions, although these technologies can also be used in an application other than an application of the NR system, for example, a sixth (6^{th} Generation, 6G) communication system.

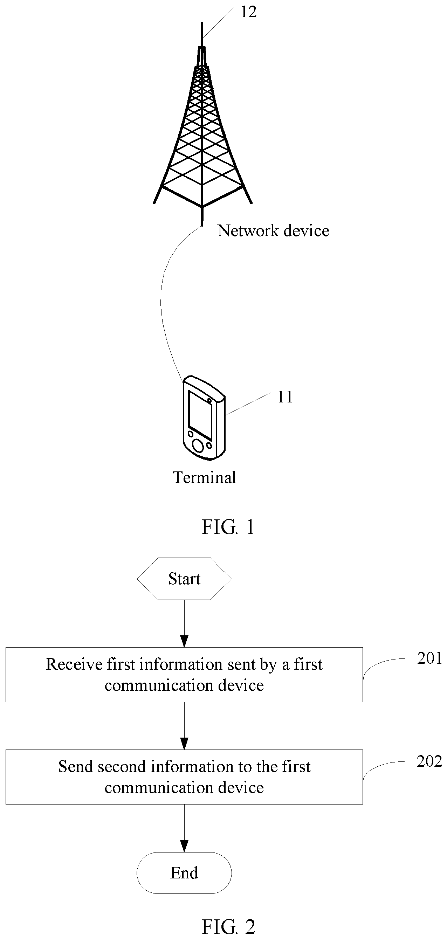

FIG 1 is a block diagram of a wireless communication system to which an embodiment of this application is applicable. The wireless communication system includes a terminal 11 and a network device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID) or a vehicle-mounted device (VUE), a pedestrian terminal (PUE), or RedCap UE. The RedCap UE may include a wearable device, an industrial sensor, a video monitoring device, and the like. The wearable device includes a band, a headset, eyeglasses, and the like. It should be noted that a specific type of the terminal 11 is not limited in this embodiment of this application.

The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in this application, only a base station in an NR system is used as an example, but a specific type of the base station is not limited.

In addition, this embodiment of this application may be applied to a scenario in which a broadcast/multicast (broadcast/multicast) characteristic is supported, for example, a scenario in which a public safety and mission critical (public safety and mission critical), a V2X application (V2X applications), transparent IPv4/IPv6 multicast delivery (transparent IPv4/IPv6 multicast delivery), an IPTV, software delivery over wireless (software delivery over wireless), or a group communications and IoT application (group communications and IoT applications) that supports a broadcast/multicast characteristic. Certainly, this embodiment of this application sets no limitation thereto. For example, another unicast scenario may also be used.

A neural network information transmission method and apparatus, a communication device, and a storage medium provided in the embodiments of this application are described in detail below with reference to the accompanying drawings by using specific embodiments and application scenarios thereof.

FIG 2 is a flowchart of a neural network information transmission method according to an embodiment of this application. The method is applied to a second communication device. As shown in FIG 2, the method includes the following steps.

Step 201: Receive first information sent by a first communication device, where the first information is output information of a first neural network of the first communication device.

That the method is applied to the second communication device may be understood as that the method is performed by the second communication device.

In this embodiment of this application, the first communication device may be a terminal, and the second communication device may be a network device; or the first communication device may be a terminal, and the second communication device may be another terminal; or the first communication device may be a network device, and the second communication device may be another network device.

Further, the first communication device may alternatively be one or more devices, that is, first information sent by the one or more devices is received, and second information is sent to the one or more devices. For example, first information sent by a terminal group is received, and after the second information is obtained, the second information is sent to the terminal group.

The first neural network may be a convolutional neural network (Convolutional Neural Networks, CNN) or a recurrent neural network (Recurrent Neural Network, RNN). This is not limited in this embodiment of the present invention. For example, the first neural network may be another deep neural network, such as a generative adversarial network (Generative Adversarial Network, GAN) or a long short-term memory (Long Short-Term Memory, LSTM).

In addition, information output by the first neural network may be information sent by the first communication device to the second communication device, for example, information sent by the terminal to the network device, information sent by the network device to the terminal, information transmitted between terminals, or information transmitted between network devices.

It should be noted that, in this embodiment of this application, receiving the first information may include at least one of the flowing processing: demodulation, channel decoding, signal source decoding, decompression, and verification, to obtain the first information. Because at a first communication device end, the first communication device may perform at least one of signal source encoding, compression, channel encoding, and modulation on the first information, to convert the first information into a signal and send the signal to the second communication device.

Step 202: Send second information to the first communication device, where the second information is information obtained by training the first information or third information as an input of a second neural network of the second communication device, and the third information is information obtained based on the first information.

After receiving the first information, the second communication device may input the first information to the second neural network for training to obtain the second information, or may perform a related operation on the first information after receiving the first information, to obtain the third information, and then input the third information to the second neural network for training, to obtain the second information. In addition, because the second information is obtained through training and is used to be sent to the first communication device, the second information may also be referred to as training interaction information. Further, after receiving the second information, the first communication device may update the first neural network based on the second information; in other words, the second information may be used by the first communication device to update the first neural network.

In this embodiment of this application, the neural network may also be understood as an artificial intelligence (Artificial Intelligence, AI) network.

In this embodiment of this application, the first information or the third information may be trained as the input of the second neural network, and the second information obtained through training is sent to the first communication device, so that the second neural network is trained in real time, that is, the second neural network is optimized in real time, to improve service performance of the second neural network and further improve communication performance of the communication device.

In an optional implementation, the first information includes at least one of the following:
a signal, information, and signaling.

The signal includes but is not limited to at least one of the following:
a first signal carried on a reference signal resource and a second signal carried on a channel.

For example, the first signal may include at least one of the following:
a demodulation reference signal (Demodulation Reference Signal, DMRS), a channel sounding reference signal (Sounding Reference Signal, SRS), a synchronization signal block (synchronization signal block, SSB), a tracking reference signal (tracking reference signal TRS), a phase-tracking reference signal (Phase-tracking reference signal, PTRS), a channel state information reference signal (Channel State Information reference signal, CSI-RS), and the like.

In addition, the first signal may be used for signal processing, for example, signal detection, filtering, and equalization.

The second signal may include at least one of the following:
a physical downlink control channel (Physical Downlink Control Channel, PDCCH), a physical downlink shared channel (Physical Downlink Shared Channel, PDSCH), a physical uplink control channel (Physical Uplink Control Channel, PUCCH), a physical uplink shared channel (Physical Uplink Shared Channel, PUSCH), a physical random access channel (Physical Random Access Channel, PRACH), a physical broadcast channel (Physical Broadcast Channel, PBCH), and the like.

The information includes but is not limited to at least one of the following:
channel state information, beam information, channel prediction information, interference information, positioning information, track information, service prediction information, service management information, parameter prediction information, and parameter management information.

The channel state information may include channel state information feedback information. For example, the channel state information includes channel-related information, channel matrix-related information, channel characteristic information, channel matrix characteristic information, a precoding matrix indicator (Precoding Matrix Indicator, PMI), a rank indication (rank indication, RI), a CSI-RS resource indicator (CSI-RS resource indicator, CRI), a channel quality indicator (Channel Quality Indicator, CQI), and a layer indicator (layer indicator, LI).

The channel state information may also include channel state information of partial reciprocity of an uplink and a downlink of frequency-division duplex (Frequency-division Duplex, FDD). For example, for an FDD system, according to partial reciprocity, the network device may obtain angle information and delay information according to an uplink channel, and may notify the terminal of the angle information and the delay information or other channel state information with partial reciprocity, or directly estimated downlink channel information by using a CSI-RS pre-coding or direct indication method, and the terminal may perform reporting according to an instruction of a base station or perform selection and reporting in an indication range of a base station, to reduce a calculation amount of the terminal and overheads of CSI reporting.

The beam information may include beam quality, beam indication information (for example, a reference signal ID), beam failure indication information, and new beam indication information in beam failure recovery.

Further, the beam information may be used for beam management, for example, includes beam measurement, beam reporting, beam prediction, beam failure detection, beam failure recovery, and new beam indication in beam failure recovery.

The channel prediction information may include at least one of channel state information prediction, beam prediction, and the like.

The interference information may include interference information such as intra-cell interference, inter-cell interference, out-of-band interference, and intermodulation interference.

The positioning information may be information about a specific location of the terminal that is estimated by using a reference signal (for example, an SRS), for example, includes at least one of a horizontal location and a vertical location, or information used for auxiliary location estimation.

The track information may be a possible future track of the terminal that is estimated by using a reference signal (for example, an SRS), or information used to help with track estimation.

The service prediction information may be prediction information of a higher-layer service, for example, a predicted throughput, a required data packet size, and a service requirement.

The service management information may be management information of a higher-layer service, for example, a moving speed or noise information.

The parameter prediction information may be a predicted moving speed, noise information, or the like.

The parameter management information may be a moving speed, noise information, or the like.

The signaling is not limited to control signaling, for example, related signaling of power control or related signaling of beam management.

Optionally, the third information includes information obtained by performing an operation on at least one the signal, the information, and the signaling.

The operation may be signal detection, signal processing, equalization, modulation, demodulation, or the like. This is not specifically limited thereto. Further, the operation may be a corresponding operation performed according to impact such as noise, interference, radio channel fading, and delay caused to the first information.

In this implementation, after the operation is performed on some or all information in the first information, the first information is input into the second neural network.

It should be noted that, in this embodiment of this application, some data and information (for example, channel state information and beam information) may be directly used as the input of the second neural network.

In an optional implementation, the second information includes:
information about at least one target unit in the second neural network.

That the second information includes the information about the at least one target unit may be understood as that the second information is a combination of information about multiple target units.

The target unit may include at least one of the following:
a neuron, a multiplicative coefficient of the neuron, an additive coefficient of the neuron, a deviation of the neuron, a weighting coefficient of the neuron, and a parameter of an activation function.

The multiplicative coefficient may also be referred to as a weight (weight), and the additive coefficient may also be referred to as a bias (bias).

The parameter of the activation function is, for example, a leakage parameter of a leaky rectified linear unit (leaky Rectified Linear Unit, leaky ReLU) or a parametric rectified linear unit (Parametric Rectified Linear Unit, PReLU).

The neuron may include at least one of the following:
a convolution kernel, a pooling (pooling) unit, and a recurrent unit.

For example, for a CNN, the neuron may include a convolution kernel. For example, the target unit may include a convolution kernel, a weight coefficient of the convolution kernel (which may also be referred to as a multiplicative coefficient of the convolution kernel), and a deviation of the convolution kernel (which may also be referred to as an additive coefficient of the convolution kernel).

For the CNN, the neuron may include a pooling unit, and the target unit may include a convolution kernel, a pooling method, and a parameter of the convolution kernel.

For example, for a recurrent recursion network/recurrent neural network (Recurrent Neural Network, RNN), the neuron may include a recurrent unit. For example, the target unit may include a recurrent unit and a weighting coefficient of the recurrent unit, where the weighting coefficient of the recurrent unit may include a multiplicative weighting coefficient of the recurrent unit (for example, includes a weighting weight of impact exerted by a previous state on a current state or a weighting weight of impact exerted by a previous state on a current input), and an additive weighting coefficient (that is, an offset) of the recurrent unit. It should be noted that, in the RNN, the recurrent unit is a special neuron, and an input of the recurrent unit includes not only a current input, but also a previous input, and may further include a previous input and/or intermediate information of a previous time.

Optionally, the information about the target unit includes information of a loss function for the target unit; or
the information about the target unit includes an identifier of the target unit and target information of a loss function for the target unit.

The target unit may be any target unit corresponding to the second information, that is, information about each target unit may include information of the loss function for the target unit, or may include an identifier of the target unit and target information of the loss function for the target unit.

Optionally, the information of the loss function for the target unit may include at least one of the following:
gradient information of the loss function for the target unit;
deviation information of the loss function for the target unit; and
derivative information of the loss function for the target unit.

The gradient information may include a combination of a gradient and at least one of the following:
historical information, a learning rate, a learning step, an exponential attenuation rate, and a constant of the target unit.

The foregoing combination manner may include a combination of various common mathematical operations such as adding/subtracting a multiplier, an N^{th} power, taking the N^{th} square root, a logarithm, a logarithm, calculating a derivation, and calculating a derivative, where N is any number, for example, N may be a positive number or a negative number or 0, or a real number or a complex number.

The gradient includes at least one of the following: a current gradient of the second information that is obtained through training and a previous gradient of the second information that is obtained through training; and
the previous gradient of the second information that is obtained through training may be a gradient obtained in one or more times of training before the second information is obtained through training.

The deviation information may include a combination of a deviation and at least one of the following:
historical information, a learning rate, a learning step, an exponential attenuation rate, and a constant of the target unit.

For the foregoing combination manner, reference may be made to the foregoing gradient combination manner. Details are not described herein again.

Further, the deviation may include at least one of the following: a current deviation of the second information that is obtained through training and a previous deviation of the second information that is obtained through training.

The derivative information includes a combination of a derivative and at least one of the following:
historical information, a learning rate, a learning step, an exponential attenuation rate, and a constant of the target unit.

For the foregoing combination manner, reference may be made to the foregoing gradient combination manner. Details are not described herein again.

Further, the derivative may include at least one of the following: a current derivative of the second information that is obtained through training and a previous derivative of the second information that is obtained through training.

Optionally, the historical information of the target unit is: information about the target unit that is included in fourth information sent to the first communication device before the second information is sent, where the fourth information is information obtained by training the second neural network before the second information is obtained.

The fourth information may be information obtained through first K times of training performed before performing training based on the first information or the third information, and K is a positive integer. For example, the first information is n^{th} information sent by the first communication device, and the fourth information may be information obtained by training (n-k)^{th} information (k=1, 2, 3, ..., K) sent by the first communication device. For another example, the fourth information may be information obtained by training (n-k)^{th} information (k=1, 2, 3, ..., K), (n-k+1)^{th} information, ..., and (n-k+L)^{th} (L=1, 2, ..., k-1) information sent by the first communication device.

In this implementation, due to a combination including the historical information of the target unit, the first communication device is more accurate when updating the first neural network by using the second information.

In addition, the exponential attenuation rate may include an exponential attenuation rate estimated for the first time in a training process, an exponential attenuation rate estimated for the second time, an exponential attenuation rate estimated for an N^{th} time, and the like, where N is a positive integer.

However, the constant may be one or more predefined constants.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

The foregoing combination manner may include a combination of various common mathematical operations such as adding/subtracting a multiplier, an N^{th} power, taking the N^{th} square root, a logarithm, a logarithm, calculating a derivation, and calculating a derivative, where N is any number, for example, N may be a positive number or a negative number or 0, or a real number or a complex number.

In an implementation in which the loss function includes a loss function obtained by performing weighted combination on loss information of multiple parts output by the second neural network, a function associated with a loss of each part may include a combined function of at least one of an error between an output and a label, a mean square error, a normalized mean square error, a correlation, an entropy, and mutual information; or a function associated with a loss of each part may include a combined function of at least one of an error between an output and a label, a mean square error, a normalized mean square error, a correlation, an entropy, and mutual information and a constant.

In addition, weighting of weighted combinations of loss information may include a combination of a linear average, a multiplicative average, and another common averaging method.

Because the loss function included in the second information includes a loss function obtained by performing weighted combination on loss information of multiple parts, the first neural network updated by the first communication device can be more accurate.

Optionally, the multiple parts of the output include:
multiple parts that are divided according to at least one of a space domain resource, a code domain resource, a frequency domain resource, and a time domain resource.

For example, the output of the second neural network may be divided in a manner of an antenna, an antenna element, an antenna panel (panel), a transmitter and receiver unit (Transmitter and Receiver Unit, TXRU), a beam (an analog beam or a digital beam), a layer (Layer), a rank (Rank), an antenna angle (such as an inclination angle), and the like.

For example, the output of the second neural network may be divided in different manners such as orthogonal or non-orthogonal code domains. The code domains have multiple division methods, such as Code Division Multiple Access (Code Division Multiple Access, CDMA).

For example, the output of the second neural network may be divided in a manner of a resource block (Resource Block, RB), a sub-band, or a physical resource group (physical resource group, PRG).

For example, the output of the second neural network may be divided in a manner of a subcarrier, a symbol, a slot, or a semi-slot.

In an optional implementation, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

For example, in the second information, sorting may be performed according to target unit IDs. For example, a smaller ID indicates a higher order, or a larger ID indicates a higher order. Certainly, sorting of information content may also be independent of the ID.

When sorting is performed based on at least one of the foregoing items, when the target unit includes a multiplicative coefficient and an additive coefficient, for multiple neurons, multiplicative coefficients of all the neurons may be first listed, and then additive coefficients of all the neurons are listed, or additive coefficients of all the neurons are first listed, and then multiplicative coefficients of all the neurons are listed, or after a multiplicative coefficient and an additive coefficient of one neuron are listed, a multiplicative coefficient and an additive coefficient of a next neuron are listed. For a single neuron, a multiplicative coefficient may be before an additive coefficient, or an additive coefficient is before a multiplicative coefficient, or there is no fixed requirement for a sequence of a multiplicative coefficient and an additive coefficient.

A ranking of the multiplicative coefficient may be an ID of an upper-layer neuron associated with the multiplicative coefficient, an ID of a current-layer neuron associated with the multiplicative coefficient, or any ranking.

A ranking of the additive coefficient may be an ID of a current-layer neuron associated with the additive coefficient.

It should be noted that the foregoing ranking is merely an example for description. In this embodiment of this application, a sequence of content in the second information is not limited.

In an optional implementation, the second information includes:
gradient information of a target unit whose gradient is greater than or equal to a preset threshold.

In this implementation, only gradient information of a target unit whose gradient is greater than or equal to a preset threshold can be sent to the first communication device, to compress the second information.

Certainly, the second information may alternatively be compressed by using another compression method, for example, in various lossy or lossless manners such as entropy coding and Hoffman coding.

Further, the second information may further indicate a compression method, for example, one or more bits are used to indicate a compression method of the second information.

In an optional implementation, the at least one target unit is determined through configuration by a network side or reporting by a terminal.

In this implementation, only information about some target units may be sent to the first communication device, to achieve a Dropout (Dropout) effect. Dropout is a means for preventing overfitting in deep learning, and has a good fault tolerance capability. S principle of Dropout is that during training, an activation value of a neuron stops working at a specific probability p.

Certainly, the foregoing network side configuration may be configured in advance, or a set of some target units is default in a protocol. In addition, during training, only an ID of the set may be configured or reported.

Optionally, same bit overheads or different bit overheads are used for gradients of target units in the second information, for example, different bit overheads may be allocated to different target units according to a neuron, a multiplicative coefficient, and an additive coefficient. For example, bit overheads of a gradient of the multiplicative coefficient are higher than those of a gradient of the additive coefficient.

Optionally, the second information may be carried in downlink control information (Downlink Control Information, DCI), media access control control element (media access control control element, MAC CE) Radio Resource Control (Radio Resource Control, RRC), a PUSCH, a PDSCH, a PDCCH, or a PUCCH.

Optionally, the second information may be sent periodically, semi-persistently, or aperiodically.

In periodic sending, a period may be configured and updated by the RRC or the MAC CE. In addition, once configured, sending is performed periodically based on a configured parameter.

In semi-persistent sending, configuration and updating are performed by the RRC or the MAC CE. In addition, after configuration, the MAC CE or the DCI is activated, and the MAC CE or the DCI is sent periodically after being activated until the MAC CE or the DCI is deactivated, or a quantity of configured periods is then deactivated.

In aperiodic sending, configuration and updating is performed by the RRC or the MAC CE. In addition, after configuration, the MAC CE or the DCI is activated, and after activation, sending is performed for L times, and L=1. Specifically, L may be configured by a network.

Optionally, the second information may be automatically sent or neural network training may be performed according to a network instruction or reporting or idleness of the terminal.

The idleness includes at least one of the following:
being in a wifi state;
power exceeds a specific threshold or in a charging state;
supporting or in a particular traffic pattern (for example, sending of the second information is not taken into traffic overheads); and
there is no requirement for service data, or a requirement is less than a specific threshold.

It should be noted that in this embodiment of this application, the information about the target unit is not limited to including an identifier of the target unit and target information of the loss function for the target unit, for example, may be a specific parameter of the target unit.

In this embodiment of this application, first information sent by a first communication device is received, where the first information is output information of a first neural network of the first communication device; and second information is sent to the first communication device, where the second information is information obtained by training the first information or third information as an input of a second neural network of a second communication device, and the third information is information obtained based on the first information. In this way, because the first information or the third information may be trained as the input of the second neural network, and the second information obtained through training is sent to the first communication device, the second neural network can be trained in real time, to improve communication performance of the communication device.

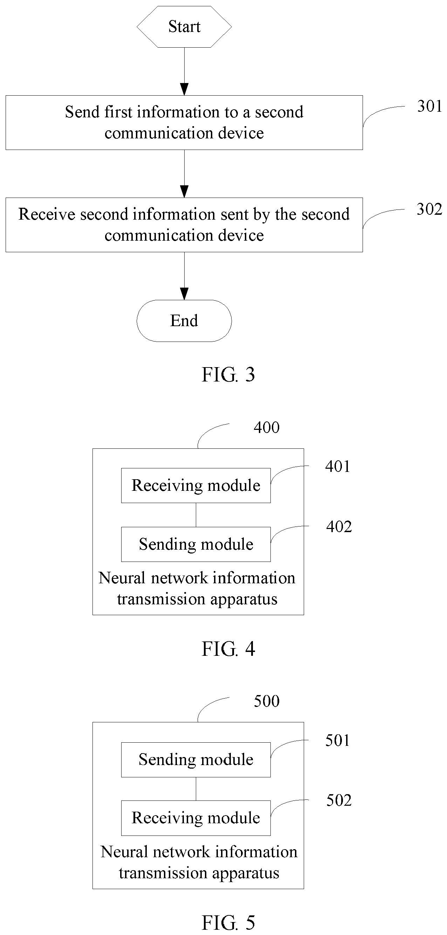

FIG 3 is a flowchart of another neural network information transmission method according to an embodiment of this application. The method is applied to a first communication device. As shown in FIG 3, the method includes the following steps.

Step 301: Send first information to a second communication device, where the first information is output information of a first neural network of the first communication device.

Step 302: Receive second information sent by the second communication device, where the second information is information obtained by training the first information or third information as an input of a second neural network of the second communication device, and the third information is information obtained based on the first information.

Optionally, after the receiving second information sent by the second communication device, the method further includes:
updating the first neural network according to the second information.

The updating the first neural network according to the second information may be: updating an output layer of the first neural network according to an input layer of the second neural network in the second information, for example, updating information about a corresponding unit at the output layer of the first neural network according to information about a target unit at the input layer of the second neural network; or may be: updating a neural parameter (a bias, a weight, a parameter of an activation function, or the like) at an output layer of the first neural network according to a derivative, a gradient, or a deviation of an output loss function of the second neural network relative to an input layer neutron of the second neural network, or updating a derivative, a gradient, or a deviation of an output loss function of the second neural network relative to an input layer neutron of the first neural network. The neuron may also be not limited to the output layer of the first neural network or the input layer of the second neural network, and may alternatively be an input layer or a hidden layer of the first neural network, or an output layer or a hidden layer of the second neural network. For example, information about a corresponding unit at the hidden layer of the first neural network is updated according to information about a target unit at the input layer of the second neural network, or information about a corresponding unit at the input layer of the first neural network is updated according to information about a target unit at the input layer of the second neural network. Other combinations are not described again.

Optionally, the first information includes at least one of the following:
a signal, information, and signaling.

Optionally, the signal includes at least one of the following:
a first signal carried on a reference signal resource and a second signal carried on a channel;
   and/or
the information includes at least one of the following:
   channel state information, beam information, channel prediction information, interference information, positioning information, track information, service prediction information, service management information, parameter prediction information, and parameter management information;
      and/or
   the signaling includes control signaling.

Optionally, the third information includes information obtained by performing an operation on at least one the signal, the information, and the signaling.

Optionally, the second information includes:
information about at least one target unit in the second neural network.

Optionally, the target unit includes at least one of the following:
a neuron, a multiplicative coefficient of the neuron, an additive coefficient of the neuron, a deviation of the neuron, a weighting coefficient of the neuron, and a parameter of an activation function.

Optionally, the neutron includes at least one of the following:
a convolution kernel, a pooling unit, and a recurrent unit.

Optionally, the information about the target unit includes information of a loss function for the target unit; or
the information about the target unit includes an identifier of the target unit and target information of a loss function for the target unit.

Optionally, the information of the loss function for the target unit includes at least one of the following:
gradient information of the loss function for the target unit;
deviation information of the loss function for the target unit; and
derivative information of the loss function for the target unit.

Optionally, the gradient information includes a combination of a gradient and at least one of the following:
historical information, a learning rate, a learning step, an exponential attenuation rate, and a constant of the target unit;
   and/or
the deviation information includes a combination of a deviation and at least one of the following:
   historical information, a learning rate, a learning step, an exponential attenuation rate, and a constant of the target unit;
      and/or
   the derivative information includes a combination of a derivative and at least one of the following:
      historical information, a learning rate, a learning step, an exponential attenuation rate, and a constant of the target unit; where
      the historical information of the target unit is information about the target unit that is included in fourth information sent to the first communication device before the second information is sent, where the fourth information is information obtained by training the second neural network before the second information is obtained.

Optionally, the gradient includes at least one of the following: a current gradient of the second information that is obtained through training and a previous gradient of the second information that is obtained through training;
and/or
the deviation includes at least one of the following: a current deviation of the second information that is obtained through training and a previous deviation of the second information that is obtained through training;
   and/or
the derivative includes at least one of the following: a current derivative of the second information that is obtained through training and a previous derivative of the second information that is obtained through training.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

Optionally, the multiple parts of the output include:
multiple parts that are divided according to at least one of a frequency domain resource and a time domain resource.

Optionally, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

Optionally, the second information includes:
gradient information of a target unit whose gradient is greater than or equal to a preset threshold.

Optionally, the at least one target unit is determined through configuration by a network side or reporting by a terminal.

It should be noted that this embodiment is used as an implementation of a network device side corresponding to the embodiment shown in FIG 2. For a specific implementation of this embodiment, reference may be made to related descriptions of the embodiment shown in FIG 2. To avoid repetition, details are not described in this embodiment. In this embodiment, communication performance of the communication device can also be improved.

FIG 4 is a structural diagram of a neural network information transmission apparatus according to an embodiment of the present invention. The apparatus is applied to a second communication device. As shown in FIG 4, a neural network information transmission apparatus 400 includes:
a receiving module 401, configured to receive first information sent by a first communication device, where the first information is output information of a first neural network of the first communication device; and
a sending module 402, configured to send second information to the first communication device, where the second information is information obtained by training the first information or third information as an input of a second neural network of the second communication device, and the third information is information obtained based on the first information.

Optionally, the first information includes at least one of the following:
a signal, information, and signaling.

Optionally, the signal includes at least one of the following:
a first signal carried on a reference signal resource and a second signal carried on a channel;
   and/or
the information includes at least one of the following:
   channel state information, beam information, channel prediction information, interference information, positioning information, track information, service prediction information, service management information, parameter prediction information, and parameter management information;
      and/or
   the signaling includes control signaling.

Optionally, the third information includes information obtained by performing an operation on at least one the signal, the information, and the signaling.

Optionally, the second information includes:
information about at least one target unit in the second neural network.

Optionally, the target unit includes at least one of the following:
a neuron, a multiplicative coefficient of the neuron, an additive coefficient of the neuron, a deviation of the neuron, a weighting coefficient of the neuron, and a parameter of an activation function.

Optionally, the neutron includes at least one of the following:
a convolution kernel, a pooling unit, and a recurrent unit.

Optionally, the information about the target unit includes information of a loss function for the target unit; or
the information about the target unit includes an identifier of the target unit and target information of a loss function for the target unit.

Optionally, the information of the loss function for the target unit includes at least one of the following:
gradient information of the loss function for the target unit;
deviation information of the loss function for the target unit; and
derivative information of the loss function for the target unit.

Optionally, the gradient information includes a combination of a gradient and at least one of the following:
historical information, a learning rate, a learning step, an exponential attenuation rate, and a constant of the target unit;
   and/or
the deviation information includes a combination of a deviation and at least one of the following:
   historical information, a learning rate, a learning step, an exponential attenuation rate, and a constant of the target unit;
      and/or
   the derivative information includes a combination of a derivative and at least one of the following:
      historical information, a learning rate, a learning step, an exponential attenuation rate, and a constant of the target unit; where
      the historical information of the target unit is information about the target unit that is included in fourth information sent to the first communication device before the second information is sent, where the fourth information is information obtained by training the second neural network before the second information is obtained.

Optionally, the gradient includes at least one of the following: a current gradient of the second information that is obtained through training and a previous gradient of the second information that is obtained through training;
and/or
the deviation includes at least one of the following: a current deviation of the second information that is obtained through training and a previous deviation of the second information that is obtained through training;
   and/or
the derivative includes at least one of the following: a current derivative of the second information that is obtained through training and a previous derivative of the second information that is obtained through training.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

Optionally, the multiple parts of the output include:
multiple parts that are divided according to at least one of a space domain resource, a code domain resource, a frequency domain resource, and a time domain resource.

Optionally, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

Optionally, the second information includes:
gradient information of a target unit whose gradient is greater than or equal to a preset threshold.

Optionally, the at least one target unit is determined through configuration by a network side or reporting by a terminal.

The neural network information transmission apparatus provided in this embodiment of this application can implement processes in the method embodiment of FIG 2. To avoid repetition, details are not described herein again, and communication performance of the communication device can be improved.

It should be noted that the neural network information transmission apparatus in this embodiment of this application may be an apparatus, or may be a component, an integrated circuit, or a chip in the second communication device.

FIG 5 is a structural diagram of another neural network information transmission apparatus according to an embodiment of the present invention. The apparatus is applied to a first communication device. As shown in FIG 5, a neural network information transmission apparatus 500 includes:
a sending module 501, configured to send first information to a second communication device, where the first information is output information of a first neural network of the first communication device; and
a receiving module 502, configured to receive second information sent by the second communication device, where the second information is information obtained by training the first information or third information as an input of a second neural network of the second communication device, and the third information is information obtained based on the first information.

Optionally, the first information includes at least one of the following:
a signal, information, and signaling.

Optionally, the signal includes at least one of the following:
a first signal carried on a reference signal resource and a second signal carried on a channel;
   and/or
the information includes at least one of the following:
   channel state information, beam information, channel prediction information, interference information, positioning information, track information, service prediction information, service management information, parameter prediction information, and parameter management information;
      and/or
   the signaling includes control signaling.

Optionally, the third information includes information obtained by performing an operation on at least one the signal, the information, and the signaling.

Optionally, the second information includes:
information about at least one target unit in the second neural network.

Optionally, the target unit includes at least one of the following:
a neuron, a multiplicative coefficient of the neuron, an additive coefficient of the neuron, a deviation of the neuron, a weighting coefficient of the neuron, and a parameter of an activation function.

Optionally, the neutron includes at least one of the following:
a convolution kernel, a pooling unit, and a recurrent unit.

Optionally, the information about the target unit includes information of a loss function for the target unit; or
the information about the target unit includes an identifier of the target unit and target information of a loss function for the target unit.

Optionally, the information of the loss function for the target unit includes at least one of the following:
gradient information of the loss function for the target unit;
deviation information of the loss function for the target unit; and
derivative information of the loss function for the target unit.

Optionally, the gradient information includes a combination of a gradient and at least one of the following:
historical information, a learning rate, a learning step, an exponential attenuation rate, and a constant of the target unit;
   and/or
the deviation information includes a combination of a deviation and at least one of the following:
   historical information, a learning rate, a learning step, an exponential attenuation rate, and a constant of the target unit;
      and/or
   the derivative information includes a combination of a derivative and at least one of the following:
      historical information, a learning rate, a learning step, an exponential attenuation rate, and a constant of the target unit; where
      the historical information of the target unit is information about the target unit that is included in fourth information sent to the first communication device before the second information is sent, where the fourth information is information obtained by training the second neural network before the second information is obtained.

Optionally, the gradient includes at least one of the following: a current gradient of the second information that is obtained through training and a previous gradient of the second information that is obtained through training;
and/or
the deviation includes at least one of the following: a current deviation of the second information that is obtained through training and a previous deviation of the second information that is obtained through training;
   and/or
the derivative includes at least one of the following: a current derivative of the second information that is obtained through training and a previous derivative of the second information that is obtained through training.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

Optionally, the multiple parts of the output include:
multiple parts that are divided according to at least one of a frequency domain resource and a time domain resource.

Optionally, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

Optionally, the second information includes:
gradient information of a target unit whose gradient is greater than or equal to a preset threshold.

Optionally, the at least one target unit is determined through configuration by a network side or reporting by a terminal.

Optionally, the apparatus further includes:
an updating module, configured to update the first neural network according to the second information.

The neural network information transmission apparatus provided in this embodiment of this application can implement processes in the method embodiment of FIG 3. To avoid repetition, details are not described herein again, and communication performance of the communication device can be improved.

It should be noted that the neural network information transmission apparatus in this embodiment of this application may be an apparatus, or may be a component, an integrated circuit, or a chip in the first communication device.

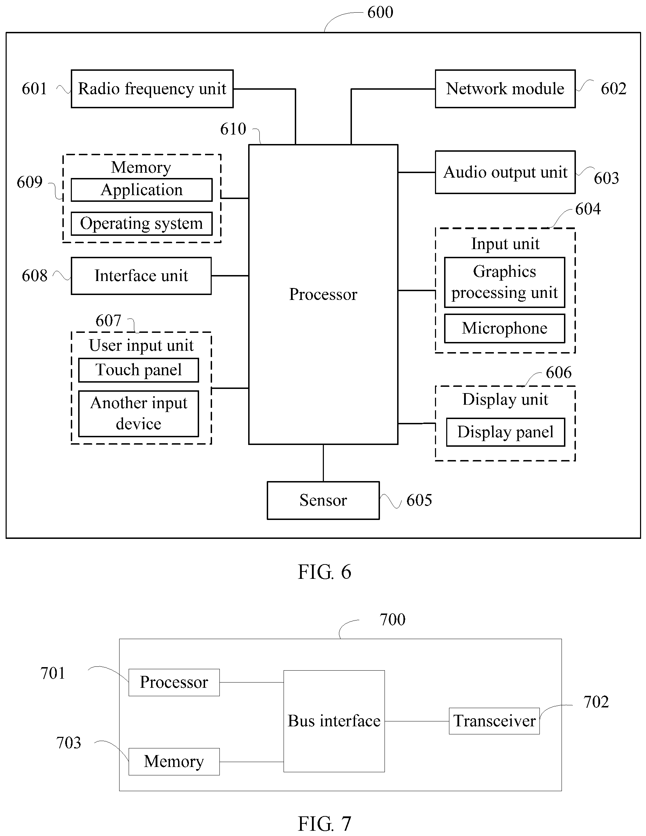

FIG 6 is a schematic diagram of a hardware structure of a communication device for implementing embodiments of this application.

The communication device 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

It may be understood by a person skilled in the art that the communication device 600 may further include a power supply (such as a battery) that supplies power to each component. The power supply may be logically connected to the processor 610 by using a power management system, to implement functions such as charging, discharging, and power consumption management by using the power management system. A structure of the communication device shown in FIG 6 does not constitute a limitation on the electronic device, and may include more or fewer parts than those shown in the figure, or combine some components, or have different part arrangements. Details are not described herein again.

The radio frequency unit 601 is configured to receive first information sent by a first communication device, where the first information is output information of a first neural network of the first communication device.

The radio frequency unit 601 is further configured to send second information to the first communication device, where the second information is information obtained by training the first information or third information as an input of a second neural network of the second communication device, and the third information is information obtained based on the first information.

Optionally, the first information includes at least one of the following:
a signal, information, and signaling.

Optionally, the signal includes at least one of the following:
a first signal carried on a reference signal resource and a second signal carried on a channel;
   and/or
the information includes at least one of the following:
   channel state information, beam information, channel prediction information, interference information, positioning information, track information, service prediction information, service management information, parameter prediction information, and parameter management information;
      and/or
   the signaling includes control signaling.

Optionally, the third information includes information obtained by performing an operation on at least one the signal, the information, and the signaling.

Optionally, the second information includes:
information about at least one target unit in the second neural network.

Optionally, the target unit includes at least one of the following:
a neuron, a multiplicative coefficient of the neuron, an additive coefficient of the neuron, a deviation of the neuron, a weighting coefficient of the neuron, and a parameter of an activation function.

Optionally, the neutron includes at least one of the following:
a convolution kernel, a pooling unit, and a recurrent unit.

Optionally, the information about the target unit includes information of a loss function for the target unit; or
the information about the target unit includes an identifier of the target unit and target information of a loss function for the target unit.

Optionally, the information of the loss function for the target unit includes at least one of the following:
gradient information of the loss function for the target unit;
deviation information of the loss function for the target unit; and
derivative information of the loss function for the target unit.

Optionally, the gradient information includes a combination of a gradient and at least one of the following:
historical information, a learning rate, a learning step, an exponential attenuation rate, and a constant of the target unit;
   and/or
the deviation information includes a combination of a deviation and at least one of the following:
   historical information, a learning rate, a learning step, an exponential attenuation rate, and a constant of the target unit;
      and/or
   the derivative information includes a combination of a derivative and at least one of the following:
      historical information, a learning rate, a learning step, an exponential attenuation rate, and a constant of the target unit; where
      the historical information of the target unit is information about the target unit that is included in fourth information sent to the first communication device before the second information is sent, where the fourth information is information obtained by training the second neural network before the second information is obtained.

Optionally, the gradient includes at least one of the following: a current gradient of the second information that is obtained through training and a previous gradient of the second information that is obtained through training;
and/or
the deviation includes at least one of the following: a current deviation of the second information that is obtained through training and a previous deviation of the second information that is obtained through training;
   and/or
the derivative includes at least one of the following: a current derivative of the second information that is obtained through training and a previous derivative of the second information that is obtained through training.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

Optionally, the multiple parts of the output include:
multiple parts that are divided according to at least one of a space domain resource, a code domain resource, a frequency domain resource, and a time domain resource.

Optionally, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

Optionally, the second information includes:
gradient information of a target unit whose gradient is greater than or equal to a preset threshold.

Optionally, the at least one target unit is determined through configuration by a network side or reporting by a terminal.

In this embodiment, communication performance of the communication device can be improved.

Optionally, an embodiment of the present invention further provides a communication device. The communication device is a second communication device, and includes a processor 610, a memory 608, and a program or an instruction that is stored in the memory 608 and may run on the processor 610. When the program or the instruction is executed by the processor 610, processes of the embodiment of the foregoing neural network information transmission method can be implemented, and a same technical effect can be achieved. To avoid repetition, details are not described herein again.

FIG 7 is a structural diagram of a communication device according to an embodiment of the present invention. A communication device 700 includes a processor 701, a transceiver 702, a memory 703, and a bus interface.

The transceiver 702 is configured to send first information to a second communication device, where the first information is output information of a first neural network of the first communication device.

The transceiver 702 is further configured to receive second information sent by the second communication device, where the second information is information obtained by training the first information or third information as an input of a second neural network of the second communication device, and the third information is information obtained based on the first information.

Optionally, the first information includes at least one of the following:
a signal, information, and signaling.

Optionally, the signal includes at least one of the following:
a first signal carried on a reference signal resource and a second signal carried on a channel;
   and/or
the information includes at least one of the following:
   channel state information, beam information, channel prediction information, interference information, positioning information, track information, service prediction information, service management information, parameter prediction information, and parameter management information;
      and/or
   the signaling includes control signaling.

Optionally, the third information includes information obtained by performing an operation on at least one the signal, the information, and the signaling.

Optionally, the second information includes:
information about at least one target unit in the second neural network.

Optionally, the target unit includes at least one of the following:
a neuron, a multiplicative coefficient of the neuron, an additive coefficient of the neuron, a deviation of the neuron, a weighting coefficient of the neuron, and a parameter of an activation function.

Optionally, the neutron includes at least one of the following:
a convolution kernel, a pooling unit, and a recurrent unit.

Optionally, the information about the target unit includes information of a loss function for the target unit; or
the information about the target unit includes an identifier of the target unit and target information of a loss function for the target unit.

Optionally, the information of the loss function for the target unit includes at least one of the following:
gradient information of the loss function for the target unit;
deviation information of the loss function for the target unit; and
derivative information of the loss function for the target unit.

Optionally, the gradient information includes a combination of a gradient and at least one of the following:
historical information, a learning rate, a learning step, an exponential attenuation rate, and a constant of the target unit;
   and/or
the deviation information includes a combination of a deviation and at least one of the following:
   historical information, a learning rate, a learning step, an exponential attenuation rate, and a constant of the target unit;
      and/or
   the derivative information includes a combination of a derivative and at least one of the following:
      historical information, a learning rate, a learning step, an exponential attenuation rate, and a constant of the target unit; where
      the historical information of the target unit is information about the target unit that is included in fourth information sent to the first communication device before the second information is sent, where the fourth information is information obtained by training the second neural network before the second information is obtained.

Optionally, the gradient includes at least one of the following: a current gradient of the second information that is obtained through training and a previous gradient of the second information that is obtained through training;
and/or
the deviation includes at least one of the following: a current deviation of the second information that is obtained through training and a previous deviation of the second information that is obtained through training;
   and/or
the derivative includes at least one of the following: a current derivative of the second information that is obtained through training and a previous derivative of the second information that is obtained through training.

Optionally, the loss function includes a combined function of at least one of an error between an output of the second neural network and a label, a mean square error, a normalized mean square error, a correlation, an entropy, and mutual information; or
the loss function includes a combined function of at least one of an error between an output of the second neural network and a label, a mean square error, a normalized mean square error, a correlation, an entropy, and mutual information; or
the loss function includes a loss function obtained through weighted combination of loss information of multiple parts output by the second neural network, and the loss information includes at least one of the following: a loss value and a loss-associated function.

Optionally, the multiple parts of the output include:
multiple parts that are divided according to at least one of a frequency domain resource and a time domain resource.

Optionally, in a case that the second information includes information about multiple target units in the second neural network,
the information about the multiple target units is sorted in the second information according to identifiers of the target unit; or
the information about the multiple target units is sorted in the second information according to at least one of the following:
   a neuron, a multiplicative coefficient of the neuron, an additive coefficient of the neuron, a deviation of the neuron, a weighting coefficient of the neuron, and a parameter of an activation function.

Optionally, the second information includes:
gradient information of a target unit whose gradient is greater than or equal to a preset threshold.

Optionally, the at least one target unit is determined through configuration by a network side or reporting by a terminal.

Optionally, the processor 701 is configured to update the first neural network according to the second information.

In this embodiment, communication performance of the communication device can be improved.

The transceiver 702 is configured to receive and send data under the control of the processor 701, and the transceiver 702 includes at least two antenna ports.

In FIG 7, a bus architecture may include any quantity of interconnected buses and bridges, and is specifically linked by various circuits of one or more processors represented by the processor 701 and a memory represented by the memory 703. The bus architecture may further link various other circuits such as a peripheral device, a voltage regulator, and a power management circuit together. These are all well-known in the art, and therefore are not further described in this specification. The bus interface provides interfaces. The transceiver 702 may be multiple elements, in other words, includes a transmitter and a receiver, and provides a unit configured to communicate with various other apparatuses on a transmission medium. For different user equipment, the user interface 704 may further be an interface that can be externally or internally connected to a required device. The connected device includes but is not limited to a keypad, a display, a loudspeaker, a microphone, a joystick, and the like.

The processor 701 is responsible for managing the bus architecture and common processing, and the memory 703 may store data used when the processor 701 performs an operation.

Preferably, an embodiment of the present invention further provides a communication device. The communication device is a first communication device, and includes a processor 701, a memory 703, and a program or an instruction that is stored in the memory 703 and may run on the processor 701. When the program or the instruction is executed by the processor 701, processes of the embodiment of the foregoing neural network information transmission method can be implemented, and a same technical effect can be achieved. To avoid repetition, details are not described herein again.

It should be noted that in this embodiment of this application, the second communication device may also be in the structure shown in FIG 7, or the first communication device may be in the structure shown in FIG 6. Details are not described herein again.

An embodiment of this application further provides a readable storage medium. A program or an instruction is stored in the readable storage medium, and when the program or the instruction is executed by a processor, steps in the neural network information transmission method on a side of the second communication device provided in this embodiment of this application are implemented, or when the program or the instruction is executed by a processor, steps in the neural network information transmission method on a side of the first communication device provided in this embodiment of this application are implemented.

An embodiment of this application further provides a computer program product. The computer program product is stored in a non-volatile storage medium, and the computer program product is executed by at least one processor to implement steps in the neural network information transmission method on a side of the second communication device provided in this embodiment of this application, or the computer program product is executed by at least one processor to implement steps in the neural network information transmission method on a side of the first communication device provided in this embodiment of this application.

The processor is a processor in the terminal or the network device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction to implement processes of the embodiment of the neural network information transmission method on a side of the first communication device provided in this embodiment of this application or the neural network information transmission method on a side of the second communication device provided in this embodiment of this application, and a same technical effect can be achieved. To avoid repetition, details are not described herein again.

It should be understood that the chip mentioned in this embodiment of this application may also be referred to as a system-level chip, a system chip, a chip system, or a system on a chip.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, characteristics described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. A neural network information transmission method, applied to a second communication device, wherein the neural network information transmission method comprises:
receiving first information sent by a first communication device, wherein the first information is output information of a first neural network of the first communication device; and
sending second information to the first communication device, wherein the second information is information obtained by training the first information or third information as an input of a second neural network of the second communication device, and the third information is information obtained based on the first information.

2. The method according to claim 1, wherein the first information comprises at least one of the following: a signal, information, and signaling.

3. The method according to claim 2, wherein the signal comprises at least one of the following:
a first signal carried on a reference signal resource and a second signal carried on a channel;
and/or
the information comprises at least one of the following:
channel state information, beam information, channel prediction information, interference information, positioning information, track information, service prediction information, service management information, parameter prediction information, and parameter management information;
and/or
the signaling comprises control signaling.

4. The method according to claim 2, wherein the third information comprises information obtained by performing an operation on at least one of the signal, the information, and the signaling.

5. The method according to claim 1, wherein the second information comprises:
information about at least one target unit in the second neural network.

6. The method according to claim 5, wherein the target unit comprises at least one of the following:
a neuron, a multiplicative coefficient of the neuron, an additive coefficient of the neuron, a deviation of the neuron, a weighting coefficient of the neuron, and a parameter of an activation function.

7. The method according to claim 6, wherein the neuron comprises at least one of the following:
a convolution kernel, a pooling unit, and a recurrent unit.

8. The method according to claim 5, wherein the information about the target unit comprises information about a loss function for the target unit; or
the information about the target unit comprises an identifier of the target unit and target information of a loss function for the target unit.

9. The method according to claim 8, wherein the information about the loss function for the target unit comprises at least one of the following:
gradient information of the loss function for the target unit;
deviation information of the loss function for the target unit; and
derivative information of the loss function for the target unit.

10. The method according to claim 9, wherein the gradient information comprises a combination of a gradient and at least one of the following:
historical information, a learning rate, a learning step, an exponential attenuation rate, and a constant of the target unit;
and/or
the deviation information comprises a combination of a deviation and at least one of the following:
historical information, a learning rate, a learning step, an exponential attenuation rate, and a constant of the target unit;
and/or
the derivative information comprises a combination of a derivative and at least one of the following:
historical information, a learning rate, a learning step, an exponential attenuation rate, and a constant of the target unit; wherein
the historical information of the target unit is information about the target unit that is comprised in fourth information sent to the first communication device before the second information is sent, wherein the fourth information is information obtained by training the second neural network before the second information is obtained.

11. The method according to claim 10, wherein the gradient comprises at least one of the following: a current gradient of the second information that is obtained through training and a previous gradient of the second information that is obtained through training;
and/or
the deviation comprises at least one of the following: a current deviation of the second information that is obtained through training and a previous deviation of the second information that is obtained through training;
and/or
the derivative comprises at least one of the following: a current derivative of the second information that is obtained through training and a previous derivative of the second information that is obtained through training.

12. The method according to claim 8, wherein the loss function comprises a combined function of at least one of an error between an output of the second neural network and a label, a mean square error, a normalized mean square error, a correlation, an entropy, and mutual information; or
the loss function comprises a combined function of at least one of an error between an output of the second neural network and a label, a mean square error, a normalized mean square error, a correlation, an entropy, and mutual information; or
the loss function comprises a loss function obtained through weighted combination of loss information of multiple parts output by the second neural network, and the loss information comprises at least one of the following: a loss value and a loss-associated function.

13. The method according to claim 12, wherein the output multiple parts comprise:
multiple parts that are divided according to at least one of a space domain resource, a code domain resource, a frequency domain resource, and a time domain resource.

14. The method according to claim 5, wherein in a case that the second information comprises information about multiple target units in the second neural network,
the information about the multiple target units is sorted in the second information according to identifiers of the target unit; or
the information about the multiple target units is sorted in the second information according to at least one of the following:
a neuron, a multiplicative coefficient of the neuron, an additive coefficient of the neuron, a deviation of the neuron, a weighting coefficient of the neuron, and a parameter of an activation function.

15. The method according to claim 9, wherein the second information comprises:
gradient information of a target unit whose gradient is greater than or equal to a preset threshold.

16. The method according to claim 5, wherein the at least one target unit is determined through configuration by a network side or reporting by a terminal.

17. A neural network information transmission method, applied to a first communication device, wherein the neural network information transmission method comprises:
sending first information to a second communication device, wherein the first information is output information of a first neural network of the first communication device; and
receiving second information sent by the second communication device, wherein the second information is information obtained by training the first information or third information as an input of a second neural network of the second communication device, and the third information is information obtained based on the first information.

18. The method according to claim 17, wherein the first information comprises at least one of the following:
a signal, information, and signaling.

19. The method according to claim 18, wherein the signal comprises at least one of the following:
a first signal carried on a reference signal resource and a second signal carried on a channel;
and/or
the information comprises at least one of the following:
channel state information, beam information, channel prediction information, interference information, positioning information, track information, service prediction information, service management information, parameter prediction information, and parameter management information;
and/or
the signaling comprises control signaling.

20. The method according to claim 18, wherein the third information comprises information obtained by performing an operation on at least one of the signal, the information, and the signaling.

21. The method according to claim 17, wherein the second information comprises:
information about at least one target unit in the second neural network.

22. The method according to claim 21, wherein the target unit comprises at least one of the following:
a neuron, a multiplicative coefficient of the neuron, an additive coefficient of the neuron, a deviation of the neuron, a weighting coefficient of the neuron, and a parameter of an activation function.

23. The method according to claim 22, wherein the neuron comprises at least one of the following:
a convolution kernel, a pooling unit, and a recurrent unit.

24. The method according to claim 21, wherein the information about the target unit comprises information about a loss function for the target unit; or
the information about the target unit comprises an identifier of the target unit and target information of a loss function for the target unit.

25. The method according to claim 24, wherein the information about the loss function for the target unit comprises at least one of the following:
gradient information of the loss function for the target unit;
deviation information of the loss function for the target unit; and
derivative information of the loss function for the target unit.

26. The method according to claim 25, wherein the gradient information comprises a combination of a gradient and at least one of the following:
historical information, a learning rate, a learning step, an exponential attenuation rate, and a constant of the target unit;
and/or
the deviation information comprises a combination of a deviation and at least one of the following:
historical information, a learning rate, a learning step, an exponential attenuation rate, and a constant of the target unit;
and/or
the derivative information comprises a combination of a derivative and at least one of the following:
historical information, a learning rate, a learning step, an exponential attenuation rate, and a constant of the target unit; wherein
the historical information of the target unit is information about the target unit that is comprised in fourth information sent to the first communication device before the second information is sent, wherein the fourth information is information obtained by training the second neural network before the second information is obtained.

27. The method according to claim 26, wherein the gradient comprises at least one of the following: a current gradient of the second information that is obtained through training and a previous gradient of the second information that is obtained through training;
and/or
the deviation comprises at least one of the following: a current deviation of the second information that is obtained through training and a previous deviation of the second information that is obtained through training;
and/or
the derivative comprises at least one of the following: a current derivative of the second information that is obtained through training and a previous derivative of the second information that is obtained through training.

28. The method according to claim 24, wherein the loss function comprises a combined function of at least one of an error between an output of the second neural network and a label, a mean square error, a normalized mean square error, a correlation, an entropy, and mutual information; or
the loss function comprises a combined function of at least one of an error between an output of the second neural network and a label, a mean square error, a normalized mean square error, a correlation, an entropy, and mutual information; or
the loss function comprises a loss function obtained through weighted combination of loss information of multiple parts output by the second neural network, and the loss information comprises at least one of the following: a loss value and a loss-associated function.

29. The method according to claim 28, wherein the output multiple parts comprise:
multiple parts that are divided according to at least one of a frequency domain resource and a time domain resource.

30. The method according to claim 21, wherein in a case that the second information comprises information about multiple target units in the second neural network,
the information about the multiple target units is sorted in the second information according to identifiers of the target unit; or
the information about the multiple target units is sorted in the second information according to at least one of the following:
a neuron, a multiplicative coefficient of the neuron, an additive coefficient of the neuron, a deviation of the neuron, a weighting coefficient of the neuron, and a parameter of an activation function.

31. The method according to claim 25, wherein the second information comprises:
gradient information of a target unit whose gradient is greater than or equal to a preset threshold.

32. The method according to claim 17, wherein the at least one target unit in the second neural network is determined through configuration by a network side or reporting by a terminal.

33. The method according to claim 17, wherein after the receiving second information sent by the second communication device, the method further comprises:
updating the first neural network according to the second information.

34. A neural network information transmission apparatus, applied to a second communication device, wherein the neural network information transmission apparatus comprises:
a receiving module, configured to receive first information sent by a first communication device, wherein the first information is output information of a first neural network of the first communication device; and
a sending module, configured to send second information to the first communication device, wherein the second information is information obtained by training the first information or third information as an input of a second neural network of the second communication device, and the third information is information obtained based on the first information.

35. The apparatus according to claim 34, wherein the second information comprises:
information about at least one target unit in the second neural network.

36. A neural network information transmission apparatus, applied to a first communication device, wherein the neural network information transmission apparatus comprises:
a sending module, configured to send first information to a second communication device, wherein the first information is output information of a first neural network of the first communication device; and
a receiving module, configured to receive second information sent by the second communication device, wherein the second information is information obtained by training the first information or third information as an input of a second neural network of the second communication device, and the third information is information obtained based on the first information.

37. The apparatus according to claim 36, wherein the second information comprises:
information about at least one target unit in the second neural network.

38. A communication device, wherein the communication device is a second communication device, and comprises a memory, a processor, and a program or an instruction that is stored in the memory and that may run on the processor, and when the program or the instruction is executed by the processor, steps in the neural network information transmission method according to any one of claims 1 to 16 are implemented.

39. A communication device, wherein the communication device is a first communication device, and comprises a memory, a processor, and a program or an instruction that is stored in the memory and that may run on the processor, and when the program or the instruction is executed by the processor, steps in the neural network information transmission method according to any one of claims 17 to 33 are implemented.

40. A readable storage medium, wherein a program or an instruction is stored on the readable storage medium, and when the program or the instruction is executed by a processor, steps in the neural network information transmission method according to any one of claims 1 to 16 are implemented, or when the program or the instruction is executed by the processor, steps in the neural network information transmission method according to any one of claims 17 to 33 are implemented.
